# FASCICULE DE BREVET EUROPEEN

(11) **EP 2 055 460 B1**
(45) Date de publication et mention de la délivrance du brevet: **14.09.2011**
(21) Numéro de dépôt: 08167103.4
(22) Date de dépôt: 21.10.2008
(51) Int. Cl.: B29C 47/32, B29C 47/92, B29L 30/00

(54) **Dispositif pour l'extrusion d'une bande de gomme**
Vorrichtung zum Extrudieren eines Gummibands
Device for extruding a rubber strip

(30) Priorité: 30.10.2007 FR 0758692
(43) Date de publication de la demande: 06.05.2009
(73) Titulaire: Société de Technologie MICHELIN, 63000 Clermont-Ferrand (FR); MICHELIN Recherche et Technique S.A., 1763 Granges-Paccot (CH)
(72) Inventeur: Ougier, Christophe, 63450, Le Crest (FR); Monge, Christian, 63800, Cournon-D'Auvergne (FR)
(74) Mandataire: Reynaud, Georges

(56) Documents cités:
- JP-A- 11 048 363
- US-A- 3 359 597
- US-A- 3 543 333
- US-A- 3 694 120
- US-A- 4 642 039

## Description

L'invention a pour objet un dispositif pour l'extrusion d'une bande de gomme.

Cette bande de gomme est notamment destinée à être utilisée pour la fabrication de pneumatiques.

On connaît déjà dans l'état de la technique un dispositif pour l'extrusion d'une bande de gomme comprenant des moyens d'alimentation en gomme, munis par exemple d'une extrudeuse à vis, ainsi qu'un passage de mise en forme de la bande de gomme.

Le passage de mise en forme est délimité, d'une part, par un rouleau rotatif de mise en forme et d'entraînement de la bande et, d'autre part, par un organe de mise en forme, distinct du rouleau, disposé en regard du rouleau rotatif, par exemple une lame.

Pour mettre en forme la bande de gomme, le rouleau en rotation entraîne, à travers le passage de mise en forme, la gomme mise sous pression par les moyens d'alimentation.

Lors du passage de la gomme à travers le passage de mise en forme, le rouleau à tendance à exercer, sur une première face de la bande, des contraintes surfaciques différentes de celles exercées par la lame sur la deuxième face de la bande. Cette différences de contraintes surfaciques est annulée sous l'effet de la traction généralement exercée sur la bande en aval du passage de mise en forme.

Lorsque la bande présente une longueur désirée, l'extrusion est stoppée et la bande extrudée est coupée à la sortie du passage de mise en forme. Lors du redémarrage du dispositif, pendant une phase transitoire, le front de gomme ne subit aucune traction en aval du passage de mise en forme, si bien que les première et deuxième faces de la bande extrudée présentent une différence de tensions surfaciques non nulle.

Cette différence de tensions entraîne un enroulement de la bande sur elle même en aval du passage de mise en forme.

Les paramètres de la gomme tels que l'adhérence de la gomme sur le rouleau, la composition de la gomme peuvent être modifiés de façon à limiter cet enroulement. Toutefois, ces paramètres sont relativement difficiles à contrôler.

Le document US 3694120 - A décrit un dispositif pour l'extrusion d'une bande de gomme, du type comprenant un passage de mise en forme de la bande, délimité par un rouleau rotatif pour la mise en forme et l'entraînement de la bande.

Aussi les documents JP 11048363 - A, US 3543333 - A et US4642039 - A décrivent des dispositifs similaires.

L'invention a pour but d'éviter l'enroulement du front de gomme lors du redémarrage du dispositif à l'aide de moyens simples.

A cet effet, l'invention a pour objet un dispositif pour l'extrusion d'une bande de gomme du type comprenant un passage de mise en forme de la bande délimité par un rouleau rotatif de mise en forme et d'entraînement de la bande, caractérisé en ce qu'il comprend des moyens d'obturation du passage de mise en forme désactivables sous l'effet du dépassement d'un seuil prédéterminé de pression de la gomme en amont des moyens d'obturation.

Le dispositif selon l'invention permet d'éviter l'enroulement du front de gomme lors du redémarrage du dispositif en contrôlant la pression de la gomme.

En effet, en-dessous du seuil prédéterminé, les moyens d'obturation empêchent l'extrusion de la bande et donc son éventuel enroulement. Lorsque la pression de la gomme en amont de moyens d'obturation dépasse le seuil prédéterminé, cette pression de la gomme est suffisamment élevée pour désactiver les moyens d'obturation et pour empêcher la bande extrudée de s'enrouler sur elle même.

Des formes préférentielles de l'invention font l'objet des revendications dépendantes.

Selon des caractéristiques optionnelles du dispositif selon l'invention :
- La pression de la gomme est considérée en aval de moyens d'alimentation en gomme. Ces moyens d'alimentation comprennent par exemple une pompe volumétrique, une pompe à piston ou bien une extrudeuse munie d'une vis sans fin.
- Le dispositif comprend des moyens de mesure de la pression de gomme contre l'organe d'obturation.

Avantageusement, le dispositif comprend des moyens d'entraînement en rotation du rouleau activés de préférence dans une des conditions suivantes.

Une condition peut être que les moyens d'entraînement en rotation du rouleau sont activés par la désactivation des moyens d'obturation, notamment par le déplacement d'un organe des moyens d'obturation.

Une autre condition pour que les moyens d'entraînement en rotation du rouleau soient activés peut être que le seuil de pression prédéterminé est dépassé. Dans ce cas, la bande extrudée ne risque pas de présenter, lors de l'extrusion, d'enroulement sur elle-même.

Selon une autre caractéristique optionnelle du dispositif selon l'invention, les moyens d'obturation comprennent un organe d'obturation sollicité, par des moyens tarés en fonction du seuil prédéterminé de pression, entre :
- une position de désactivation des moyens d'obturation dans laquelle l'organe d'obturation participe à la mise en forme de la bande, et
- une position d'obturation du passage de mise en forme.

Selon d'autres caractéristiques optionnelles du dispositif selon l'invention :
- Les moyens tarés comprennent un ressort ou un vérin.
- Le dispositif comprend des moyens de détection de la position de l'organe d'obturation.

Dans un mode de réalisation, l'organe d'obturation est sollicité en position d'obturation contre la périphérie du rouleau.

Dans un autre mode de réalisation, l'organe d'obturation est formé par le rouleau, ce rouleau étant sollicité en position d'obturation contre le contour d'un orifice formant le passage de mise en forme.

L'invention a également pour objet l'utilisation d'un dispositif tel que décrit ci-dessus pour l'extrusion d'une bande de gomme destinée à la fabrication d'un pneumatique.

L'invention sera mieux comprise à la lecture de la description qui va suivre, donnée uniquement à titre d'exemple et faite en se référant aux dessins dans lesquels :
- la figure 1 est une vue en coupe d'un dispositif selon un premier mode de réalisation de l'invention pour l'extrusion d'une bande de gomme, le dispositif comprenant un organe d'obturation mobile dans une position d'obturation ;
- la figure 2 est une vue en coupe du dispositif de la figure 1 dans lequel l'organe d'obturation est dans une position intermédiaire ;
- la figure 3 est une vue en coupe du dispositif de la figure 1 dans lequel l'organe d'obturation est dans une position de désactivation ;
- les figures 4 à 6 sont des vues analogues aux figures 1 à 3 illustrant un dispositif selon un second mode de réalisation de l'invention pour l'extrusion d'une bande de gomme.

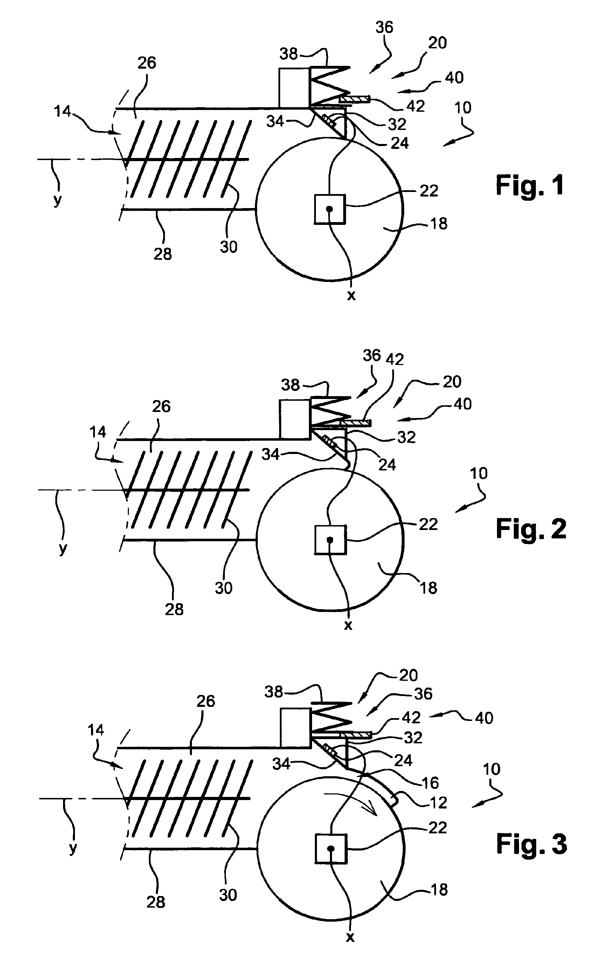

On a représenté sur les figures 1 à 3 un dispositif pour l'extrusion d'une bande de gomme selon un premier mode de réalisation. Ce dispositif est désigné par la référence générale 10.

Le dispositif 10 est destiné à fabriquer une bande 12 de gomme destinée à la fabrication d'un pneumatique.

Le dispositif 10 comprend des moyens d'alimentation 14 en gomme.

Le dispositif 10 comprend également un passage 16 de mise en forme de la bande 12 au travers duquel les moyens d'alimentation 14 poussent la gomme sous pression.

Le passage 16 est délimité, d'une part, par un rouleau rotatif 18 de mise en forme et d'entraînement de la bande 12 et, d'autre part, par des moyens 20 d'obturation du passage 16.

Le dispositif 10 comprend également des moyens 22 d'entraînement en rotation du rouleau 18.

En outre, le dispositif 10 comprend des moyens 24 de mesure de la pression de gomme en amont des moyens d'obturation 20. Dans ce qui suit, on fera référence aux termes amont et aval en considérant le sens et la direction d'extrusion de la bande 12 à travers le passage 16.

En l'espèce, les moyens d'alimentation 14 comprennent une extrudeuse 26 comprenant un corps 28 et une vis sans fin 30 mobile en rotation autour d'un axe Y à l'intérieur du corps 28.

Comme illustré sur les figures 1 à 3, les moyens d'obturation 20 comprennent un organe d'obturation 32 distinct du rouleau 18. L'organe d'obturation 20 comporte une face 34 d'appui et de fuite de la gomme provenant de l'alimentation 14.

Les moyens d'obturation 20 comprennent également des moyens tarés 36 sollicitant l'organe d'obturation 32, entre :
- une position d'obturation du passage 16 de mise en forme, illustrée à la figure 1, dans laquelle l'organe d'obturation 32 est sollicité contre le rouleau 18, et
- une position de désactivation des moyens d'obturation 20 dans laquelle l'organe d'obturation 32 participe à la mise en forme de la bande, illustrée à la figure 3.

Les moyens tarés 36 comprennent, dans l'exemple illustré sur les figures 1 à 3, un ressort 38. En variante, les moyens tarés 36 pourraient comprendre un vérin.

Entre la position d'obturation et la position de désactivation, l'organe d'obturation 20 peut se trouver dans une position, dite intermédiaire, comme cela est représentée à la figure 2. Dans cette position intermédiaire, le passage de mise en forme 16 est partiellement obturé par l'organe d'obturation 32.

De plus, les moyens d'obturation 20 comprennent un organe 40 de limitation de la course de l'organe d'obturation 32, en l'espèce une butée 42. Lorsque l'organe d'obturation 32 est dans sa position de désactivation, la butée 42 définit la position de désactivation. Dans cette position, l'organe 32 et le rouleau 18 définissent une épaisseur nominale de la bande 12.

La pression de gomme mesurée par les moyens de mesure de pression 24 est considérée en aval des moyens 14 d'alimentation en gomme, ici en aval de la vis sans fin 30 et en amont des moyens d'obturation 20. En l'espèce, les moyens de mesure 24 sont aptes à mesurer la pression de la gomme contre l'organe 32. En variante, les moyens de mesure 24 sont aptes à mesurer la pression de gomme dans le corps 28 de l'extrudeuse 26 en aval de la vis 30 et en amont de l'organe 32.

Les moyens d'obturation 20 sont désactivables sous l'effet du dépassement d'un seuil de pression prédéterminée de la gomme en amont des moyens d'obturation 20. Comme représenté sur les figures 1 à 3, l'organe d'obturation 32 est déplacé, sous l'effet de la pression de la gomme contre l'organe 32, depuis sa position d'obturation vers sa position de désactivation, lorsque cette pression dépasse le seuil prédéterminé. A cet effet, le ressort taré 38 présente des caractéristiques techniques, notamment de raideur et de longueur à vide, adaptées de façon que le ressort 38 ne se comprime qu'au delà du seuil de pression prédéterminé.

Les moyens 22 d'entraînement en rotation du rouleau 18 sont reliés aux moyens de mesure 24 et activés par le dépassement du seuil prédéterminé détecté par ces moyens de mesure 24. Ces moyens d'entraînement 22 comprennent notamment un moteur (non représenté) apte à entraîner le rouleau autour d'un axe X de rotation sensiblement perpendiculaire au plan des figures 1 à 3.

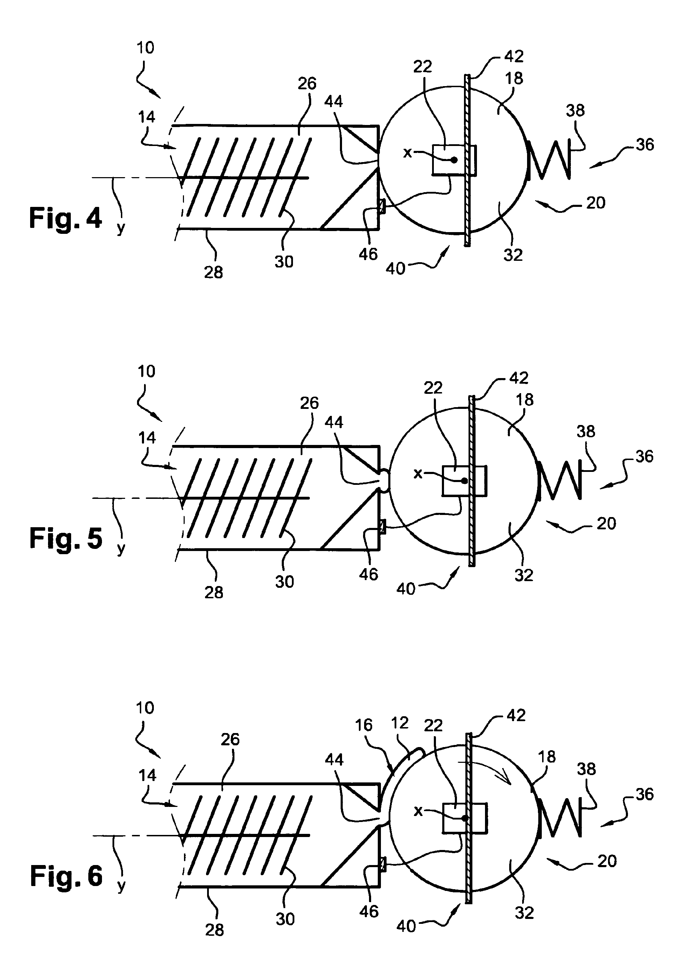

On a représenté su les figures 4 à 6 un dispositif pour l'extrusion d'une bande de gomme selon un deuxième mode de réalisation. Sur ces figures, les éléments analogues à ceux représentés sur les figures précédentes sont désignés par des références identiques.

A la différence du dispositif du premier mode de réalisation, l'extrudeuse 26 comprend un orifice 44 de sortie de la gomme ménagé dans le corps 28 de l'extrudeuse 26. Cet orifice 44 forme le passage 16 de mise en forme de la bande de gomme 12.

Dans ce deuxième mode de réalisation, l'organe d'obturation 32 est formé par le rouleau 18. Le rouleau 18 est agencé en regard de l'orifice 44 de sorte qu'il est sollicité par le ressort 38 contre le contour de l'orifice 44 dans la position d'obturation, comme cela est illustré à la figure 4.

Comme illustré à la figure 5 dans laquelle le rouleau 18 est dans une position intermédiaire, le rouleau 16 libère le passage 12 pour la mise en forme de la bande de gomme 12, lorsque la pression de gomme dépasse le seuil prédéterminé.

La position de désactivation du rouleau 18 est illustrée à la figure 6.

A la différence du premier mode de réalisation, les moyens 22 d'entraînement en rotation du rouleau 18 sont activés par la désactivation des moyens d'obturation 20, notamment le déplacement de l'organe d'obturation 32.

En l'espèce, le dispositif comprend des moyens 46 de détection de la position de l'organe d'obturation 32 ou en variante, des moyens de détection du mouvement de l'organe d'obturation 32. Les moyens d'entraînement 22 sont reliés aux moyens de détection 46 et activés par le déplacement de l'organe d'obturation 32 détecté par l'organe 46.

L'invention ne se limite pas aux modes de réalisation précédemment décrits.

En effet, le dispositif 10 peut comprendre, d'une part, des moyens d'entraînement 22 du rouleau activés par le dépassement du seuil de pression et, d'autre part, un organe d'obturation 32 formé par le rouleau 18.

Par ailleurs, le dispositif 10 peut comprendre, d'une part, des moyens d'entraînement 22 du rouleau activés par la désactivation des moyens d'obturation 20, notamment par le déplacement d'un organe d'obturation et, d'autre part, un organe d'obturation 32 sollicité en position d'obturation contre la périphérie du rouleau 18.

En outre, dans le dispositif conforme au premier mode de réalisation, l'organe d'obturation 32 peut ne pas participer à la mise en forme de la bande. Dans ce cas, le passage 12 est délimité par le rouleau 18 et par une lame fixe par rapport au rouleau 18. L'organe d'obturation 32 peut être situé en aval ou en amont de cette lame.

## Revendications

1. Dispositif (10) pour l'extrusion d'une bande de gomme (12) du type comprenant un passage (16) de mise en forme de la bande (12) délimité par un rouleau rotatif (18) de mise en forme et d'entraînement de la bande (12), **caractérisé en ce qu'**il comprend des moyens (20) d'obturation du passage (16) de mise en forme désactivables sous l'effet du dépassement d'un seuil prédéterminé de pression de la gomme en amont des moyens d'obturation (20).

2. Dispositif (10) selon la revendication 1, dans lequel la pression de la gomme est considérée en aval de moyens d'alimentation en gomme (14).

3. Dispositif (10) selon la revendication 1 ou 2, comprenant des moyens (24) de la pression de gomme contre l'organe d'obturation (20).

4. Dispositif (10) selon l'une quelconque des revendications précédentes, comprenant des moyens (22) d'entraînement en rotation du rouleau (18) activés par:
- la désactivation des moyens d'obturation (20), notamment par le déplacement d'un organe (32) des moyens d'obturation (20), ou
- le dépassement du seuil prédéterminé.

5. Dispositif (10) selon l'une quelconque des revendications précédentes, dans lequel les moyens d'obturation (20) comprennent un organe d'obturation (32) sollicité, par des moyens (36) tarés en fonction du seuil prédéterminé de pression, entre :
- une position de désactivation des moyens d'obturation (20) dans laquelle l'organe d'obturation (32) participe à la mise en forme de la bande (12), et
- une position d'obturation du passage (16) de mise en forme.

6. Dispositif (10) selon la revendication 5, dans lequel les moyens tarés (36) comprennent un ressort (38) ou un vérin.

7. Dispositif (10) selon la revendication 5 ou 6, comprenant des moyens (46) de détection de la position de l'organe d'obturation (32).

8. Dispositif (10) selon l'une quelconque des revendications 5 à 7, dans lequel l'organe d'obturation (32) est sollicité en position d'obturation contre la périphérie du rouleau (18).

9. Dispositif (10) selon l'une quelconque des revendications 5 à 7, dans lequel l'organe d'obturation (32) est formé par le rouleau (18), ce rouleau (18) étant sollicité en position d'obturation contre le contour d'un orifice (44) formant le passage (16) de mise en forme.

10. Utilisation d'un dispositif (10) selon l'une quelconque des revendications précédentes pour l'extrusion d'une bande de gomme (12) destinée à la fabrication d'un pneumatique.

## Claims

1. Device (10) for extruding a rubber strip (12), of the type comprising a die (16) for forming the strip (12), said die being bounded by a rotary roller (18) for forming and driving the strip (12), **characterized in that** it comprises means (20) for obturating the forming die (16) that are able to be deactivated when the pressure of the rubber upstream of the obturating means (20) exceeds a predetermined pressure threshold.

2. Device (10) according to Claim 1, in which the pressure of the rubber is considered downstream of the rubber feed means (14).

3. Device (10) according to Claim 1 or 2, comprising means (24) for measuring the pressure of the rubber against the obturating means (20).

4. Device (10) according to any one of the preceding claims, comprising means (22) for rotating the roller (18) that are activated when:
- the obturating means (20) are deactivated, especially by the movement of an obturating member (32) of the obturating means (20); or
- the predetermined threshold is exceeded.

5. Device (10) according to any one of the preceding claims, in which the obturating means (20) comprise an obturating member (32) moved, by means (36) tared according to the predetermined pressure threshold, between:
- a position for deactivating the obturating means (20), in which the obturating member (32) participates in the operation of forming the strip (12); and
- a position for obturating the forming die (16).

6. Device (10) according to Claim 5, in which the tared means (36) comprise a spring (38) or a cylinder.

7. Device (10) according to Claim 5 or 6, comprising means (46) for detecting the position of the obturating member (32).

8. Device (10) according to any one of Claims 5 to 7, in which the obturating member (32) is pressed into the obturating position against the periphery of the roller (18).

9. Device (10) according to any one of Claims 5 to 7, in which the obturating member (32) is formed by the roller (18), this roller (18) being pressed into the obturating position against the perimeter of an orifice (44) that forms the forming die (16).

10. Use of a device (10) according to any one of the preceding claims for extruding a rubber strip (12) intended for the manufacture of a tyre.

## Patentansprüche

1. Vorrichtung (10) zum Extrudieren eines Gummistreifens (12) jener Art, die einen Durchgang (16) zum Formen des Steifens (12) aufweist, der durch eine rotierende Rolle (18) zum Formen und Antreiben des Steifens (12) begrenzt wird, **dadurch gekennzeichnet, dass** sie Mittel (20) zum Verschließen des Formdurchgangs (16) aufweist, die unter Wirkung des Überschreitens einer Vorbestimmten Druckschwelle des Gummis stromaufwärts der Verschlussmittel (20) deaktivierbar sind.

2. Vorrichtung (10) nach Anspruch 1, wobei der Druck des Gummis stromabwärts der Gummizuführmittel (14) betrachtet wird.

3. Vorrichtung (10) nach Anspruch 1 oder 2, die Mittel (24) zum Messen des Drucks des Gummis gegen die Verschlussmittel (20) aufweist.

4. Vorrichtung (10) nach einem der vorhergehenden Ansprüche, die Mittel (22) zum Drehantrieb der Rolle (18) aufweist, die durch:
- die Deaktivierung der Verschlussmittel (20), insbesondere durch das Verschieben eines Verschlussglieds (32) der Verschlussmittel (20), oder
- das Überschreiten der Vorbestimmten Schwelle aktiviert werden.

5. Vorrichtung (10) nach einem der vorhergehenden Ansprüche, wobei die Verschlussmittel (20) ein Verschlussglied (32) aufweisen, das durch als Funktion der Vorbestimmten Druckschwelle kalibrierte Mittel (36) zwischen:
- einer Stellung zur Deaktivierung der Verschlussmittel (20), in der das Verschlussglied (32) am Formen des Steifens (12) beteiligt ist, und
- einer Stellung zum Verschluss des Formdurchgangs (16)
beaufschlagt wird.

6. Vorrichtung (10) nach Anspruch 5, wobei die kalibrierten Mittel (36) eine Feder (38) oder einen Zylinder umfassen.

7. Vorrichtung (10) nach Anspruch 5 oder 6, die Mittel (46) zur Erfassung der Stellung des Verschlussglieds (32) aufweist.

8. Vorrichtung (10) nach einem der Ansprüche 5 bis 7, wobei das Verschlussglied (32) gegen den Umfang der Rolle (18) in die Verschlussstellung beaufschlagt ist.

9. Vorrichtung (10) nach einem der Ansprüche 5 bis 7, wobei das Verschlussglied (32) durch die Rolle (18) gebildet wird, wobei diese Rolle (18) gegen die Kontur einer den Formdurchgang (16) bildenden Öffnung (44) in die Verschlussstellung beaufschlagt ist.

10. Verwerdung einer Vorrichtung (10) nach einem der vorhergehenden Ansprüche zum Extrudieren eines Gummistreifens (12), der für die Herstellung eines Reifens bestimmt ist.
